# EUROPÄISCHE PATENTSCHRIFT

(11) **EP 1 298 289 B1**
(45) Veröffentlichungstag und Bekanntmachung des Hinweises auf die Patenterteilung: **06.04.2005**
(21) Anmeldenummer: 02015880.4
(22) Anmeldetag: 17.07.2002
(51) Int. Cl.: F01N 3/021

(54) **Abgasreinigungsanordnung einer Kraftfahrzeug-Abgasanlage**
Exhaust cleaning arrangement for a motor vehicle exhaust system
Disposition d'un système de purification des gaz d'échappement d'un véhicule automobile

(30) Priorität: 11.09.2001 DE 10144613
(43) Veröffentlichungstag der Anmeldung: 02.04.2003
(73) Patentinhaber: J. Eberspächer GmbH & Co. KG, 73730 Esslingen (DE)
(72) Erfinder: Hauber, Thomas, Dr., 73776 Altbach (DE); Buhmann, Rudolf, 73732 Esslingen (DE); Werni, Marcus, 71384 Weinstadt-Schnait (DE); Wörner, Siegfried, 73734 Esslingen (DE); Zacke, Peter, Dr., 73095 Albershausen (DE)

(56) Entgegenhaltungen:
- WO-A-97/05368
- WO-A-98/40610
- US-A- 4 264 344
- US-A- 4 896 503
- US-A- 5 139 107
- US-A- 5 373 119

## Beschreibung

Die Erfindung betrifft eine Abgasreinigungsanordnung einer Kraftfahrzeug-Abgasanlage nach dem Oberbegriff von Anspruch 1.

In den vergangenen Jahren wurden verschiedene Partikelfiltersysteme bei Abgasanlagen von Kraftfahrzeugen entwickelt. Durch diese Systeme kann die Partikelemission, insbesondere bei Dieselfahrzeugen, aber grundsätzlich auch bei Fahrzeugen mit Ottomotoren und dort insbesondere bei Fahrzeugen mit direkteinspritzendem Brennverfahren stark verringert werden. Die Emissionsreduzierung beträgt mehr als 97% der Partikelmasse. Auch die feinsten Partikelemissionen, welche im Verdacht stehen, krebserregend zu sein, können dabei deutlich reduziert werden.

In gewissen Zeitabständen muß ein Partikelfilter von seinen Rußablagerungen befreit werden, damit der Durchflußwiderstand die Motorleistung nicht reduziert. Dazu hat sich die thermische Regeneration als umweltfreundlichste Methode erwiesen. Die Rußschicht wird abgebrannt, wobei sich aus dem Kohlendioxid (CO₂) und Wasserdampf bildet. Zur Rußverbrennung sind Abgastemperaturen oberhalb 550°C erforderlich. Wird ein Partikelfilter über längere Zeit betrieben, so sammeln sich größere Mengen an Asche im Filter an. Asche bildet sich aus Motoröl und Abrieb. Dadurch steigt der Strömungswiderstand des Filters an, was zu einer Verringerung der Motorleistung und zu einer Erhöhung des Kraftstoffverbrauchs führt. Deshalb muß die Asche in regelmäßigen Abständen aus dem Filter entfernt werden. Dies kann zum Beispiel durch Auswaschen des Filters mit Wasser erfolgen. Dazu muß der Partikelfilter aus dem Schalldämpfergehäuse ausgebaut werden. Der Ausbau ist nach dem Stand der Technik vergleichsweise schwierig. Da der Partikelfilter in der Regel ein hochwertiges Bauteil ist (z.B. ein monolithischer Keramikfilter aus Cordierit oder SiC, oder ein Sintermetallfilter), muß man beim Ausbau besondere Vorsicht walten lassen, um Beschädigung des Partikelfilters zu verhindern. Entsprechendes gilt für den Wiedereinbau nach dem Entfernen der Asche aus dem Filter.

Aus dem US-Patent 4.628.689 ist eine gattungsgemäße Abgasreinigungsanordnung bekannt, bei welcher der Partikelfilter und das Bodenelement jeweils gesonderte Bauteile sind, wobei zum Austausch des Partikelfilters zuerst das Bodenelement von dem Schalldämpfergehäuse gelöst und danach in einem zweiten gesonderten Arbeitsschritt der Partikelfilter aus dem Schalldämpfergehäuse entnommen werden kann.

Das US-Patent 6.152.996 offenbart einen Luftreiniger mit einem mittels einer Gewindestange und eines Halteelements in einem Gehäuse festgelegten Filter, welcher über ein lösbar mit dem Gehäuse verbundenes Bodenelement ein- und ausbaubar ist.

Bei der aus der WO 97/05368 bekannten Abgasreinigungsanordnung ist im Innern eines Schalldämpfergehäuses ein Partikelfilter aufgenommenen, der über ein den Abgasauslass umfassendes Bodenelement des Schalldämpfergehäuses ein- und ausbaubar ist.

Aufgabe der Erfindung ist die Schaffung einer Abgasreinigungsanordnung der eingangs genannten Art, bei welcher mit einfachen Mitteln Aus- und Einbau eines Partikelfilters erleichtert ist.

Gelöst wird die der Erfindung zugrundeliegende Aufgabe durch die im unabhängigen Anspruch 1 angegebenen Merkmale.

Vorteilhaft weitergebildet wird der Erfindungsgegenstand durch die Merkmale der Unteransprüche.

Dabei ist der Partikelfilter in einem eigenen topfartigen Wechselgehäuse im Innern des Schalldämpfergehäuses aufgenommen, welches seinerseits zusammen mit dem Partikelfilter leicht und schnell vom Schalldämpfergehäuse ohne besondere Vorsichtsmaßnahmen für Wartungsmaßnahmen getrennt werden kann, da der hochwertige Partikelfilter bei einem Ausbau im Wechselgehäuse hinreichend geschützt ist. Im ausgebauten Zustand kann dann die Asche aus dem Partikelfilter durch die axiale stirnseitige Öffnung des Wechselgehäuses entfernt bzw. ausgewaschen und der Partikelfilter nebst Wechselgehäuse anschließend wieder eingebaut werden. Ist es erforderlich, den Umfang des Partikelfilters zu kontrollieren, so kann der Partikelfilter gegebenenfalls noch mit einfachen Mitteln aus dem Wechselgehäuse axial herausgezogen werden.

Partikelfilter einschließlich Wechselgehäuse erstrecken sich vorzugsweise koaxial zur Achse des Mantelgehäuses des Schalldämpfers und sind im Bereich des Topfbodens des Wechselgehäuses an einer axialen Stirnseite des Schalldämpfergehäuses vorzugsweise über einen Umfangsflansch oder durch andere Verbindungsmittel, wie zum Beispiel eine V-förmige Bandschelle, hinreichend stabil und leicht lösbar mit den Schalldämpfergehäuse verbunden.

Auf der dem Topfboden abgewandten anderen offenen Axialseite kann das Wechselgehäuse zusätzlich axial und/oder radial an Innenwänden des Schalldämpfergehäuses abgestützt und insbesondere durch eine elastische Winkel-Umfangsabdichtung abgedichtet und vorgespannt sein. Die Vorspannung wird durch die Flansch- oder Bandschellenbefestigung auf der Topfbodenseite des Wechselgehäuses am Schalldämpfergehäuse erreicht.

In der offenen Axialseite des Wechselgehäuses kann ein Formpaßring eingesetzt sein, welcher eine vergrößerte axiale Abstützfläche in Richtung Winkel-Umfangsabdichtung schafft.

Dem Formpaßring kann im Innern des Wechselgehäuses eine weitere Ringdichtung vorgelagert sein, die den im Innern des Wechselgehäuses vorzugsweise formschlüssig aufgenommenen Partikelfilter axialseitig abstützt.

Im Bereich des Bodens kann der Mantel des Wechselgehäuses eine Perforation besitzen, durch die Abgas gleichmäßig in eine anschließende Schalldämpferkammer strömen kann.

Die Erfindung wird nachfolgend anhand von Ausführungsbeispielen unter Bezugnahme auf die beigefügten Zeichnungen näher erläutert; es zeigen:
- Figur 1: einen schematischen Axialschnitt durch eine Abgasreinigungsanordnung mit Wechselgehäuse und Partikelfilter in einer Ausführungsvariante,
- Figur 2: die Abgasreinigungsanordnung nach Figur 1 in einer Stirnansicht,
- Figur 3: die Einzelheit Z der Figur 1 in einer vergrößerten Darstellung,
- Figur 4: die Einzelheit Y der Figur 1 in einer vergrößerten Darstellung, und
- Figuren 5 bis 8: eine Abgasreinigungsanordnung in einer anderen Ausführungsvariante in Darstellungen entsprechend den Figuren 1 bis 4.

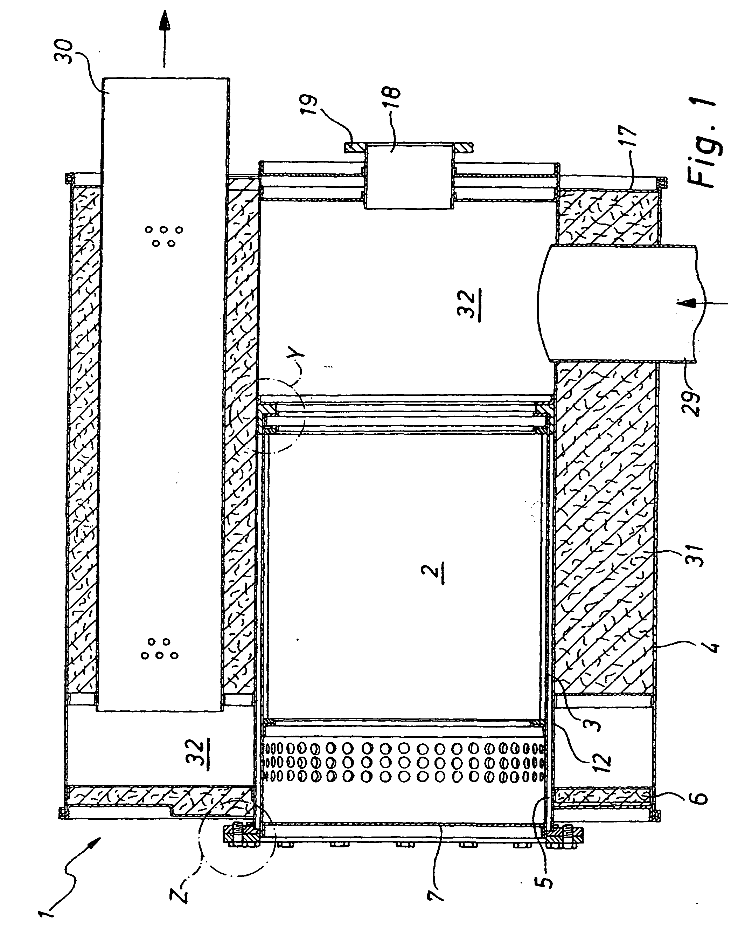

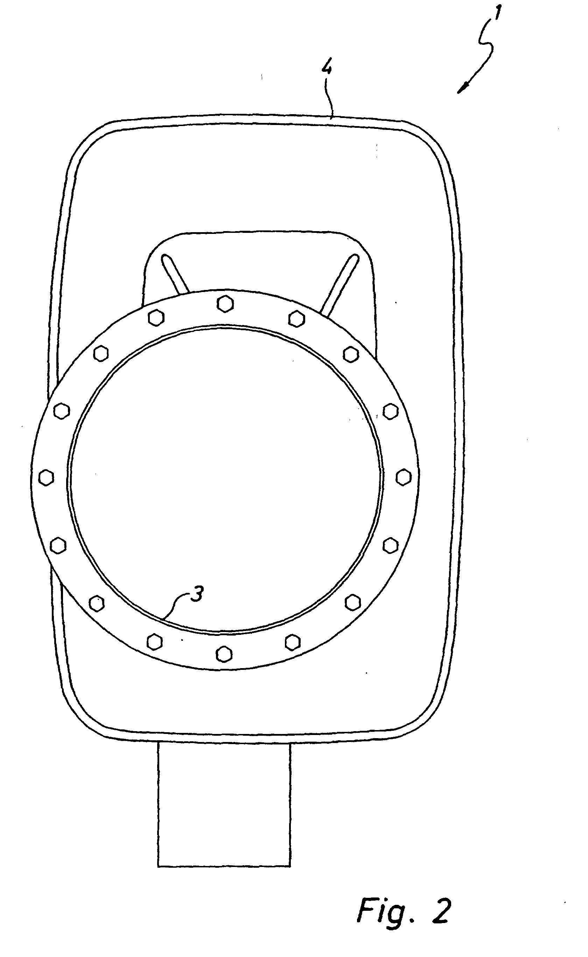

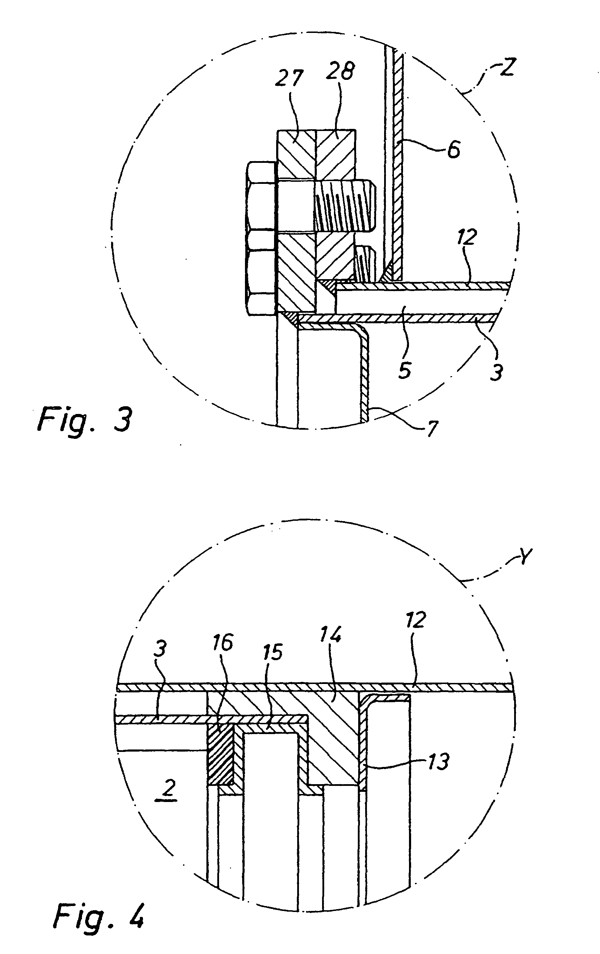

Die in den Figuren 1 bis 4 dargestellte Abgasreinigungsanordnung einer Abgasanlage eines Kraftfahrzeuges umfaßt einen Schalldämpfer 1 mit einem integrierten Partikelfilter 2.

Der Schalldämpfer 1 ist in Mantelbauweise ausgeführt und besitzt ein Schalldämpfergehäuse 4 bestehend aus einem Umfangsmantel und axialen Stirnseiten 6, 17.

Der Schalldämpfer besitzt hier nicht weiter interessierende Einzelteile, wie ein mäntelseitiges Eingangsrohr 29, ein koaxiales seitlich versetztes Ausgangsrohr 30 sowie Dämm-Material 31 zur Ausbildung von Absorptionskammern. Auch weist der Schalldämpfer Reflexionskammern 32 auf.

Die in Figur 1 rechte axiale Stirnseite 17 besitzt eine zentrale Wartungsöffnung 18 mit einem Umfangsflansch 19 zur Befestigung eines Brenners.

Die in Figur 1 linke axiale Stirnseite 6 besitzt eine zentrale axiale Gehäuseöffnung 5 zur Aufnahme eines topfartigen Wechselgehäuses 3.

Im Wechselgehäuse 3 ist in einem Formpaßsitz ein Partikelfilter 2 in Form eines monolithischen Keramikfilters angeordnet.

Das gemäß Figur 1 auf der rechten axialen Seite offene Wechselgehäuse 3 besitzt einen Topfboden 7 und einen Umfangsmantel.

Der Topfboden-Bereich des Wechselgehäuses 3 erstreckt sich durch die linke axiale Gehäuseöffnung 5 des Schalldämpfergehäuses 4.

Das Wechselgehäuse 3 ist im Bereich des Topfbodens 7 auf seinem Umfang mit der Stirnseite 6 des Schalldämpfergehäuses lösbar verbunden.

Im besonderen weist der Topfboden 7 des Wechselgehäuses 3 einen radialen Umfangsflansch 27 auf, welcher an einem radialen Gegenflansch 28 an der Stirnseite 6 des Schalldämpfergehäuses 4 schraubbefestigt ist.

Das Wechselgehäuse 3 erstreckt sich in Axialrichtung des Schalldämpfergehäuses 4.

Das dem Topfboden 7 abgewandte andere offene Ende des Wechselgehäuses 3 ist durch zumindest eine Schalldämpfer-Gehäuseinnenwand, vorzugsweise einen das Wechselgehäuse 3 umschließenden Gehäuseinnenmantel 12 und eine Radialwand 13 mit Durchgangsöffnung, abgestützt.

Das offene Ende des Wechselgehäuses 3 ist über eine Winkel-Umfangsabdichtung 14 radial und axial an den Schalldämpfer-Gehäuseinnenwänden abgestützt, insbesondere bei Schraubbefestigung des Wechselgehäuses axial vorgespannt.

Im offenen Ende des Wechselgehäuses 3 ist ein lösbarer Formpaßring 15 eingesetzt.

Der Formpaßring 15 besitzt eine U-förmigen Querschnitt und stützt sich axial an der Winkel-Umfangsabdichtung 14 ab.

Im Innern des Wechselgehäuses 3 ist eine weitere axiale Dichtung 16 vorgelagert, welche den vorzugsweise keramischen Partikelfilter 2 im Innern des Wechselgehäuses 3 axial fixiert.

Der Umfangsmantel des Wechselgehäuses 3 ist im Bereich des Topfbodens 7 perforiert.

Für eine Demontage des Wechselgehäuses 3 einschließlich Partikelfilter 2 werden die Schrauben der Flanschbefestigung 27, 28 gelöst und das Wechselgehäuse nebst Inhalt einschließlich Formpaßring 15 und axialer Dichtung 16 axial aus dem Schalldämpfergehäuse 4 durch die Stirnseite 6 gemäß Zeichnung nach links herausgezogen. Nach einem Auswaschen des Partikelfilters 2 wird das Wechselgehäuse 3 einschließlich Partikelfilter 2 entsprechend wieder eingesetzt. Gegebenenfalls wird bei einer Wartung des Partikelfilters 2 dieser vollständig aus dem Wechselgehäuse 3 durch Entfernen des Formpaßrings 15 und der axialen Dichtung 16 freigelegt.

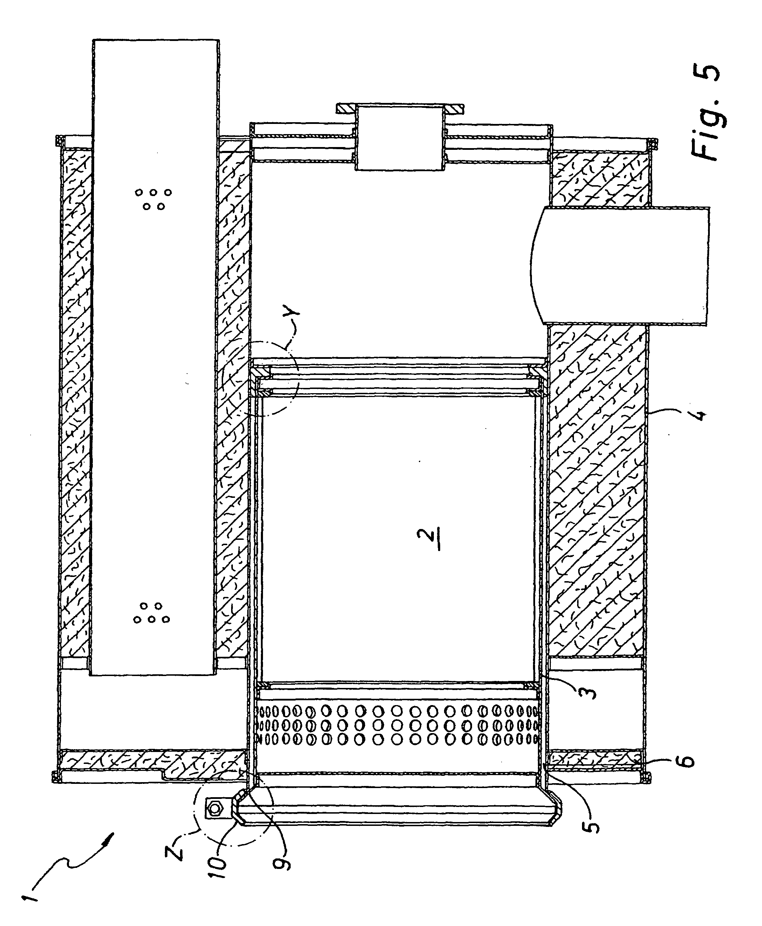

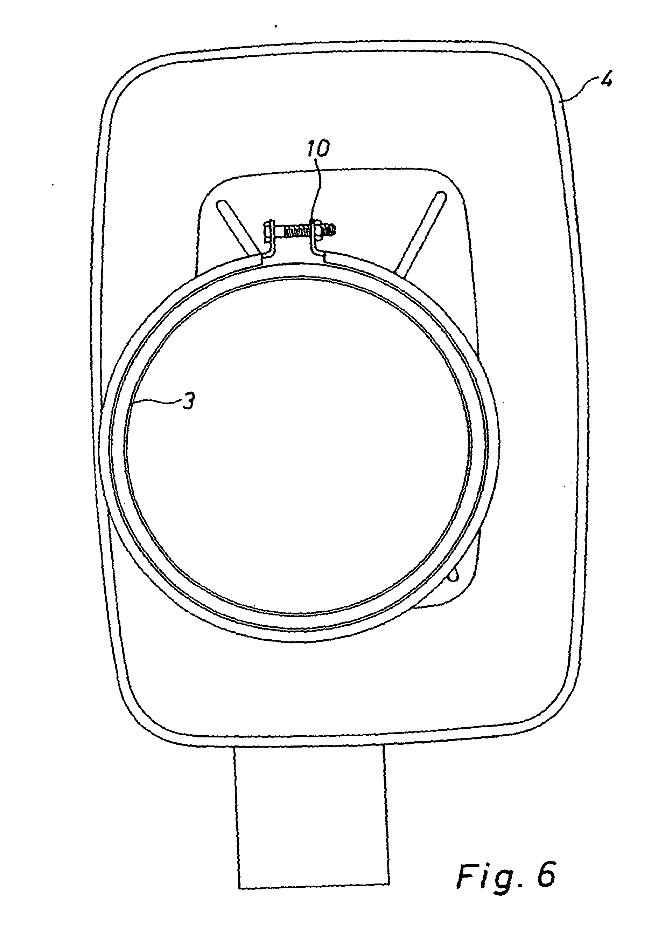

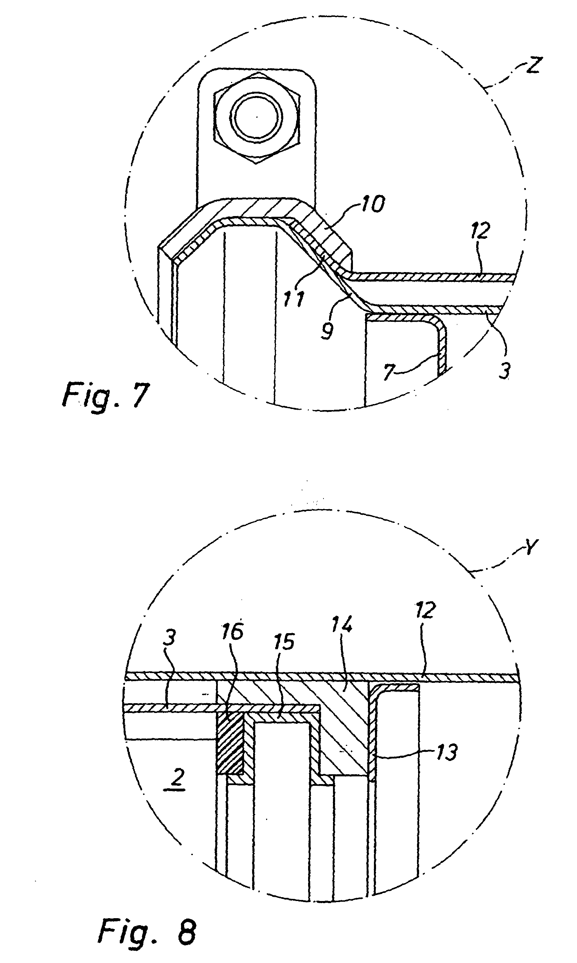

Die in den Figuren 5 bis 8 dargestellte Ausführungsvariante einer Abgasreinigungsanordnung entspricht im wesentlichen der Ausführungsvariante nach den Figuren 1 bis 4, weist jedoch anstelle der dortigen Umfangsflanschbefestigung eine Bandschellenbefestigung auf.

Im besonderen besitzt der Topfboden 7 des Wechselgehäuses 3 eine Umfangserweiterung 9, welche über eine Bandschelle 10 mit einer Erweiterung 11 des Schalldämpfergehäuses lösbar befestigt ist, wobei die Umfangserweiterung 9 des Topfbodens 7 und die Erweiterung 11 des Schalldämpfergehäuses formangepaßt sind.

Die Umfangserweiterung 9 und die Bandschelle 10 besitzen einen V-förmigen Querschnitt, und es ist zwischen der Umfangserweiterung und der Bandschelle die konische Erweiterung 11 des Schalldämpfergehäuses lösbar eingespannt.

Für eine Demontage wird die Bandschelle 10 durch Öffnen einer Schraube gelöst. Dann kann das Wechselgehäuse 3 nebst Inhalt aus dem Schalldämpfergehäuse 4 herausgezogen und nach einer Wartung des Partikelfilters 2 umgekehrt wieder in das Schalldämpfergehäuse 4 eingesetzt werden.

## Patentansprüche

1. Abgasreinigungsanordnung einer Kraftfahrzeug-Abgasanlage mit einem Schalldämpfer (1), welcher ein Schalldämpfergehäuse (4) und einen Abgaseinlass (29) sowie einen Abgasauslass (30) umfasst, und mit einem integrierten Partikelfilter (2), welcher im Innern des Schalldämpfers (1) aufgenommen ist und über ein lösbar mit dem Schalldämpfergehäuse (4) verbundenes, gesondert vom Abgaseinlass (29) und vom Abgasauslass (30) angeordnetes Bodenelement (7) ein- und ausbaubar ist,
**dadurch gekennzeichnet,**
**dass** das Bodenelement der Topfboden (7) eines topfartigen Wechselgehäuses (3) ist, in dem der Partikelfilter (2) aufgenommen ist.

2. Abgasreinigungsanordnung nach Anspruch 1, wobei sich der Topfboden-Bereich des Wechselgehäuses (3) durch eine axiale Gehäuseöffnung (5) in einer Stirnseite (6) des Schalldämpfergehäuses (4) erstreckt und der Topfboden (7) mit der Stirnseite (6) des Schalldämpfergehäuses (4) lösbar verbunden ist.

3. Abgasreinigungsanordnung nach Anspruch 1 oder 2, wobei der Topfboden (7) des Wechselgehäuses (3) einen radialen Umfangsflansch (27) aufweist, welcher an einem radialen Gegenflansch (28) an der Stirnseite (6) des Schalldämpfergehäuses (4) schraubbefestigt ist.

4. Abgasreinigungsanordnung nach Anspruch 1, 2 oder 3, wobei der Topfboden (7) des Wechselgehäuses (3) eine Umfangserweiterung (9) besitzt, welche über eine Bandschelle (10) mit einer Erweiterung (11) des Schalldämpfergehäuses (4) lösbar befestigt ist, wobei die Umfangserweiterung (9) des Topfbodens und die Erweiterung (11) des Schalldämpfergehäuses formangepaßt sind.

5. Abgasreinigungsanordnung nach Anspruch 4, wobei die Umfangserweiterung (9) und die Bandschelle (10) V-förmigen Querschnitt besitzen, und zwischen Umfangserweiterung (9) und Bandschelle (10) eine konische Erweiterung (11) des Schalldämpfergehäuses (4) lösbar eingespannt ist.

6. Abgasreinigungsanordnung nach einem der Ansprüche 1 bis 5, wobei
sich das Wechselgehäuse (3) in Axialrichtung des Schalldämpfergehäuses (4) erstreckt.

7. Abgasreinigungsanordnung nach einem der Ansprüche 1 bis 6, wobei
das dem Topfboden (7) abgewandte andere offene Ende des Wechselgehäuses (3) durch zumindest eine Schalldämpfer-Gehäuseinnenwand, vorzugsweise einen das Wechselgehäuse umschließenden Gehäuseinnenmantel (12) und eine Radialwand (13) mit Durchgangsöffnung, abgestützt ist.

8. Abgasreinigungsanordnung nach Anspruch 7, wobei das offene Ende des Wechselgehäuses (3) über eine Winkel-Umfangsabdichtung (14) radial und axial an den Schalldämpfer-Gehäuseinnenwänden abgestützt ist, insbesondere bei Schraub- oder Bandschellen-Befestigung des Wechselgehäuses (3) axial vorgespannt ist.

9. Abgasreinigungsanordnung nach Anspruch 7 oder 8, wobei im offenen Ende des Wechselgehäuses (3) ein lösbarer Formpaßring (15) eingesetzt ist.

10. Abgasreinigungsanordnung nach Anspruch 9, wobei der Formpaßring (15) einen U-förmigen Querschnitt besitzt.

11. Abgasreinigungsanordnung nach Anspruch 9 oder 10, wobei
der Formpaßring (15) sich axial an der Winkel-Umfangsabdichtung (14) abstützt.

12. Abgasreinigungsanordnung nach einem der Ansprüche 9 bis 11, wobei
im Innern des Wechselgehäuses (3) eine weitere axiale Dichtung (16) vorgelagert ist, welche den vorzugsweise keramischen Partikelfilter (2) im Innern des Wechselgehäuses axial fixiert.

13. Abgasreinigungsanordnung nach einem der Ansprüche 1 bis 12, wobei
der Umfangsmantel des Wechselgehäuses (3) im Bereich des Topfbodens (7) perforiert ist.

14. Abgasreinigungsanordnung nach einem der Ansprüche 1 bis 13, wobei
die dem Topfboden (7) des Wechselgehäuses (3) abgewandte andere Stirnseite (17) des Schalldämpfergehäuses (4) eine Wartungsöffnung (18) mit einem Befestigungsflansch (19) aufweist, an welchem ein Brenner für eine Partikelverbrennung im Innern des Schalldämpfers befestigbar ist.

## Claims

1. Exhaust-gas purification arrangement for a motor vehicle exhaust system, having a silencer (1), which comprises a silencer housing (4) and an exhaust-gas inlet (29) as well as an exhaust-gas outlet (30), and having an integrated particulate filter (2), which is accommodated in the interior of the silencer (1) and can be installed and removed via a base element (7) which is releasably connected to the silencer housing (4) and is arranged so as to be separate from the exhaust-gas inlet (29) and from the exhaust-gas outlet (30), **characterized in that** the base element is the pot base (7) of a pot-like exchangeable housing (3) in which the particulate filter (2) is accommodated.

2. Exhaust-gas purification arrangement according to Claim 1, in which the pot base region of the exchangeable housing (3) extends through an axial housing opening (5) in an end side (6) of the silencer housing (4), and the pot base (7) is releasably connected to the end side (6) of the silencer housing (4).

3. Exhaust-gas purification arrangement according to Claim 1 or 2, in which the pot base (7) of the exchangeable housing (3) has a radial circumferential flange (27) which is screw-fixed to a radial mating flange (28) at the end side (6) of the silencer housing (4).

4. Exhaust-gas purification arrangement according to Claim 1, 2 or 3, in which the pot base (7) of the exchangeable housing (3) has a circumferential widening (9) which is releasably secured to a widening (11) of the silencer housing (4) by means of a hose clip (10), the shapes of the circumferential widening (9) of the pot base and the widening (11) of the silencer housing being matched to one another.

5. Exhaust-gas purification arrangement according to Claim 4, in which the circumferential widening (9) and the hose clip (10) are V-shaped in cross section, and a conical widening (11) of the silencer housing (4) is releasably clamped between circumferential widening (9) and hose clip (10).

6. Exhaust-gas purification arrangement according to one of Claims 1 to 5, in which the exchangeable housing (3) extends in the axial direction of the silencer housing (4).

7. Exhaust-gas purification arrangement according to one of Claims 1 to 6, in which the other open end, remote from the pot base (7), of the exchangeable housing (3) is supported by at least one silencer housing inner wall, preferably a housing inner lateral surface (12), which surrounds the exchangeable housing, and a radial wall (13) with passage opening.

8. Exhaust-gas purification arrangement according to Claim 7, in which the open end of the exchangeable housing (3) is radially and axially supported on the silencer housing inner walls via a circumferential angle seal (14), and is axially prestressed in particular with screw or hose clip securing of the exchangeable housing (3).

9. Exhaust-gas purification arrangement according to Claim 7 or 8, in which a releasable shaped adjusting ring (15) is inserted in the open end of the exchangeable housing (3).

10. Exhaust-gas purification arrangement according to Claim 9, in which the shaped adjusting ring (15) is U-shaped in cross section.

11. Exhaust-gas purification arrangement according to Claim 9 or 10, in which the shaped adjusting ring (15) is axially supported on the circumferential angle seal (14).

12. Exhaust-gas purification arrangement according to one of Claims 9 to 11, in which a further axial seal (16), which axially fixes the preferably ceramic particulate filter (2) in the interior of the exchangeable housing, is mounted in front in the interior of the exchangeable housing (3).

13. Exhaust-gas purification arrangement according to one of Claims 1 to 12, in which the circumferential lateral surface of the exchangeable housing (3) is perforated in the region of the pot base (7).

14. Exhaust-gas purification arrangement according to one of Claims 1 to 13, in which the other end side (17), remote from the pot base (7) of the exchangeable housing (3), of the silencer housing (4) has a maintenance opening (18) with a securing flange (19) to which a burner for combustion of particulates in the interior of the silencer can be secured.

## Revendications

1. Agencement de purification des gaz d'échappement d'une installation de gaz d'échappement d'un véhicule automobile, comprenant un silencieux (1) qui comprend un carter de silencieux (4) et une entrée de gaz d'échappement (29) ainsi qu'une sortie de gaz d'échappement (30), et comprenant un filtre à particules intégré (2), qui est reçu à l'intérieur du silencieux (1) et qui peut être incorporé et démonté par le biais d'un élément de fond (7) connecté de manière détachable au carter de silencieux (4), disposé séparément de l'entrée de gaz d'échappement (29) et de la sortie de gaz d'échappement (30),
**caractérisé en ce que**
l'élément de fond est le fond de pot (7) d'un carter remplaçable (3) en forme de pot, dans lequel est logé le filtre à particules (2).

2. Agencement de purification des gaz d'échappement selon la revendication 1, dans lequel la région du fond de pot du carter remplaçable (3) s'étend à travers une ouverture axiale du carter (5) dans un côté frontal (6) du carter du silencieux (4) et le fond de pot (7) est connecté de manière détachable au côté frontal (6) du carter du silencieux (4).

3. Agencement de purification des gaz d'échappement selon la revendication 1 ou 2, dans lequel le fond de pot (7) du carter remplaçable (3) présente une bride périphérique radiale (27) qui est fixée par vissage sur une bride radiale conjuguée (28) sur le côté frontal (6) du carter du silencieux (4).

4. Agencement de purification des gaz d'échappement selon la revendication 1, 2 ou 3, dans lequel le fond de pot (7) du carter remplaçable (3) possède un élargissement périphérique (9) qui est fixé de manière détachable par le biais d'un collier de serrage (10) à un élargissement (11) du carter du silencieux (4), l'élargissement périphérique (9) du fond de pot et l'élargissement (11) du carter du silencieux étant adaptés l'un à l'autre de par leur forme.

5. Agencement de purification des gaz d'échappement selon la revendication 4, dans lequel l'élargissement périphérique (9) et le collier de serrage (10) possèdent une section transversale en forme de V, et un élargissement conique (11) du carter du silencieux (4) est serré de manière détachable entre l'élargissement périphérique (9) et le collier de serrage (10).

6. Agencement de purification des gaz d'échappement selon l'une quelconque des revendications 1 à 5, dans lequel
le carter remplaçable (3) s'étend dans la direction axiale du carter du silencieux (4).

7. Agencement de purification des gaz d'échappement selon l'une quelconque des revendications 1 à 6, dans lequel
l'autre extrémité ouverte du carter remplaçable (3), opposée au fond de pot (7), est supportée par au moins une paroi interne du carter du silencieux, de préférence une enveloppe interne de carter (12) entourant le carter remplaçable et une paroi radiale (13) avec une ouverture de passage.

8. Agencement de purification des gaz d'échappement selon la revendication 7, dans lequel
l'extrémité ouverte du carter remplaçable (3) est supportée, par le biais d'une étanchéité périphérique coudée (14), radialement et axialement contre les parois internes du carter du silencieux, en particulier est précontrainte axialement lors de la fixation par vissage ou par collier de serrage du carter remplaçable (3).

9. Agencement de purification des gaz d'échappement selon la revendication 7 ou 8, dans lequel
on insère dans l'extrémité ouverte du carter remplaçable (3) une bague d'ajustage de forme (15) détachable.

10. Agencement de purification des gaz d'échappement selon la revendication 9, dans lequel la bague d'ajustage de forme (15) possède une section transversale en forme de U.

11. Agencement de purification des gaz d'échappement selon la revendication 9 ou 10, dans lequel
la bague d'ajustage de forme (15) s'appuie axialement contre l'étanchéité périphérique coudée (14).

12. Agencement de purification des gaz d'échappement selon l'une quelconque des revendications 9 à 11, dans lequel
on monte préalablement à l'intérieur du carter remplaçable (3) un joint axial supplémentaire (16) qui fixe axialement le filtre à particules de préférence céramique (2) à l'intérieur du carter remplaçable.

13. Agencement de purification des gaz d'échappement selon l'une quelconque des revendications 1 à 12, dans lequel
l'enveloppe périphérique du carter remplaçable (3) est perforée dans la région du fond de pot (7).

14. Agencement de purification des gaz d'échappement selon l'une quelconque des revendications 1 à 13, dans lequel
l'autre côté frontal (17) du carter du silencieux (4), opposé au fond de pot (7) du carter remplaçable (3), présente une ouverture d'entretien (18) avec une bride de fixation (19), sur laquelle un brûleur pour une combustion des particules peut être fixé à l'intérieur du silencieux.
